# EUROPÄISCHE PATENTSCHRIFT

(11) **EP 1 097 065 B1**
(45) Veröffentlichungstag und Bekanntmachung des Hinweises auf die Patenterteilung: **11.06.2003**
(21) Anmeldenummer: 99938303.7
(22) Anmeldetag: 20.07.1999
(51) Int. Cl.: B60R 21/20

(54) **KNIE-RÜCKHALTEEINRICHTUNG FÜR FAHRZEUGE**
KNEE-RETAINING DEVICE FOR A VEHICLE
DISPOSITIF DE RETENUE D'UN GENOU DESTINE A UN VEHICULE

(30) Priorität: 20.07.1998 DE 29812892 U; 05.02.1999 DE 29902032 U
(43) Veröffentlichungstag der Anmeldung: 09.05.2001
(73) Patentinhaber: TRW Occupant Restraint Systems GmbH & Co. KG, 73553 Alfdorf (DE)
(72) Erfinder: LUTZ, Joachim, D-73579 Schechingen (DE); SCHULTZ, Dirk, D-73527 Schwäbisch Gmünd (DE)
(74) Vertreter: Sties, Jochen, Dipl.-Ing.
(86) Internationale Anmeldenummer: EP9905177
(87) Internationale Veröffentlichungsnummer: WO00005105

(56) Entgegenhaltungen:
- DE-U- 29 710 745
- US-A- 4 198 075
- US-A- 5 308 111
- US-A- 5 615 914

## Beschreibung

Die Erfindung betrifft eine Knie-Rückhalteeinrichtung gemäß dem Oberbegriff des Anspruchs 1.

Eine solche Knie-Rückhalteeinrichtung ist aus der gattungsbildenden DE-U-29710745 bekannt. Bei dieser Konstruktion werden als Fang- und Positionierungsmittel zwischen dem Kniefängerbauteil und der Basis Fangbänder oder Fangnetze verwendet. Diese haben den Nachteil, daß sie als zusätzliche Bauteile einen hohen Aufwand bei der Herstellung und der Montage erfordern.

Eine weitere Knie-Rückhalteeinrichtung ist beispielsweise aus der EP-A-0684164 bekannt. Die dort beschriebene Knie-Rückhalteeinrichtung weist eine Kniefängerplatte auf, die durch einen Gassack in Richtung der Knie eines Fahrzeuginsassen bewegbar ist. Der Gassack ist durch eine Gasquelle befüllbar und ist zwischen der Basis und der Kniefängerplatte angeordnet. Fangbänder sind einerseits an der Kniefängerplatte und andererseits an der Basis befestigt. Fangbänder und Kniefängerplatte sind als getrennte Bauteile vorgesehen. Die verwendeten Fangbänder bestehen aus einem Polyester- oder Nylongurt und sind innerhalb des Gassacks angeordnet. Zur Befestigung der Kniefängerplatte an einer Armaturenverkleidung im Ruhezustand der Knie-Rückhalteeinrichtung sind ausreißbare Befestigungen vorgesehen.

Aus der US-A-5,308,111 ist ein Beifahrer-Gassackmodul bekannt, das eine Abdeckung aufweist, an der ein Metallstreifen angebracht ist. Der Metallstreifen verbindet die Abdeckung mit einem Armaturenbrett und soll, aufgrund ihrer Steifigkeit, die Bewegung der Abdeckung beim Entfalten des Gassacks abbremsen.

Die Aufgabe der Erfindung besteht darin, die Herstellung einer Knie-Rückhalteeinrichtung für Fahrzeuge zu vereinfachen.

Erfindungsgemäß ist hierfür eine Knie-Rückhalteeinrichtung mit den Merkmalen des Anspruchs 1 vorgesehen. Durch diese Maßnahmen ist die Herstellung der Knie-Rückhalteeinrichtung vereinfacht, da die Ausrichtung und Befestigung der Fang- und Positionierungsmittel an der Basis und dem Kniefängerbauteil, im Unterschied zu flexiblen textilen Bändern, leicht zu bewerkstelligen ist. Es ist auch sichergestellt, daß im Betrieb des Fahrzeugs kein Klappern oder Schlagen der Fang- und Positionierungsmittel selbst auftritt. Als Fang- und Positionierungsmittel können beispielsweise Fangbänder oder Führungsarme eingesetzt werden. Kniefängerbauteil und/oder Fang- und Positionierungsmittel können beispielsweise aus Kunststoff oder Kunststoffspritzguß, Metall oder Metallspritzguß, Blech, Kunststoff/Gewebeverbund oder auch Metall/Gummiverbund hergestellt werden. Durch die einstückige Ausbildung der Fang- und Positionierungsmittel mit dem Kniefängerbauteil werden gegenüber Knie-Rückhalteeinrichtungen nach dem Stand der Technik Bauteile eingespart, was die Herstellung vereinfacht und verbilligt. Bei einer einstöckigen Ausführung ist keine Positionierung und kein Anbringen von Fang- und Positionierungsmitteln an das Kniefängerbauteil erforderlich, ein Herstellungsschritt, der eine hohe Genauigkeit erfordert, um nicht die Funktionsfähigkeit der Knie-Rückhalteeinrichtung zu gefährden.

In Weiterbildung der Erfindung weisen die Fang- und Positionierungsmittel wenigstens ein Fangband auf, und das wenigstens eine Fangband und das Kniefängerbauteil sind aus einem einzigen Materialzuschnitt hergestellt. Hierdurch können Kniefängerbauteil und Fangbänder schnell und in einfacher Weise hergestellt werden. Fangbänder und Kniefängerbauteil können beispielsweise aus Blech, Kunststoff oder auch Kunststoff mit Textileinlage hergestellt sein.

Vorteilhafterweise weist der Materialzuschnitt angeformte Materiallappen auf, die die Fangbänder bilden. Nach dem Zuschneiden des Materials werden die Materiallappen in eine für den Einbau der Knie-Rückhaltecinrichtung erforderliche Position gefaltet.

Besonders vorteilhaft ist die Herstellung der Fang- und Positionierungsmittel und des Kniefängerbauteils aus einem einzigen rechteckigen Materialzuschnitt, wobei die Fang- und Positionierungsmittel als durch Perforalionslinien von dem Kniefängerbauteil getrennte Bereiche des rechteckigen Materialzuschnitts ausgebildet sind. Die Form des Blechzuschnitts vereinfacht sich dadurch noch weiter, und die Länge eventuell zu bearbeitender scharfer Schnittkanten ist verringert.

Als weiterbildende Maßnahme sind die Perforationslinien durch Langlöcher gebildet. Im Verlauf der Entfaltung und insbesondere kurz vor Erreichen der Endposition des Kniefängerbauteils dehnt sich das die Langlöcher umgebende Material, so daß diese eine annähernd runde Form erhalten. Dadurch kann bspw. die Belastung der Fang- und Positionierungsmittel bei Erreichen der Endposition gemindert werden.

Bei der erfindungsgemäßen Knie-Rückhalteeinrichtung für Fahrzeuge weisen die Fang- und Positionierungsmittel eine Steifigkeit auf, die ausreicht, das Kniefängerbauteil in einer Ruheposition zu halten. Wenn das Kniefängerbauteil durch die Fang- und Positionierungsmittel in einer Ruheposition gehalten wird, können Bauteile eingespart bzw. die Herstellung vereinfacht werden, da keine ausreißbaren Befestigungen des Kniefängerbauteils an einer rückwärtigen Befestigungsplatte, beispielsweise Clipse oder Reißnähte, benötigt werden.

Es ist ebenfalls vorteilhaft, daß die Fang- und Positionierungsmittel plastisch verformbar sind. Auf diese Weise kann das Kniefängerbauteil durch die Fang- und Positionierungsmittel in seiner Ruheposition gehalten werden, und nach Aktivierung des Antriebsmittels kann das Kniefängerbauteil gegen den entsprechend zu dimensionierenden Verformungswiderstand der Fang- und Positionierungsmittel in Richtung der Knie des Insassen bewegt werden.

In Weiterbildung der Erfindung weisen die Fang- und Positionierungsmittel im plastisch verformten Zustand eine Steifigkeit auf, die ausreicht, das Kniefängerbauteil in einer nach dem Abfangen der Knie eines Fahrzeuginsassen erreichten Position zu halten. Auch nach dem Ende des Rückhaltevorgangs wird dadurch das Kniefängerbauteil in seiner Endposition gehalten, was Vorteile im Hinblick auf das Sekundär-Crash-Verhalten der Knie-Rückhalteeinrichtung bietet. Indem eine undefinierte Lage des Kniefängerbauteils nach dem Primär-Crash vermieden wird, kann eine Gefährdung der unteren Extremitäten des Fahrzeuginsassen beim Sekundär-Crash verringert werden.

Indem eine leichte Kunststoff- oder Aluminiumplatte gewählt wird, kann ein schnelles und verzögerungsarmes Ansprechen der Knie-Rückhaltceinrichtung sichergestellt werden. Blechstreifen sind einfach und praktisch ohne Materialverschnitt herstellbar und können zur Erreichung eines optimalen Bauraums gefaltet bzw. gebogen werden. Um Beschädigungen eines als Antriebsmittel dienenden Gassacks und Verletzungen von Insassen zu verhindern, können die Ränder der Blechstreifen entgratet oder gerundet sein. Um die Fangbänder während der Montage und im Ruhezustand der Knie-Rückhalteeinrichtung in einem gefalteten Zustand zu halten, können die Fangbänder im gefalteten Zustand vorfixiert werden, bspw. durch Durchsetzfügen, Verschweißen oder Vernieten von aufeinander liegenden Materiallagen der Fangbänder oder durch Durchsetzfügen, Verschweißen oder Vernieten von Fangbandabschnitten mit der Basis und/oder dem Kniefängerbauteil. Diese Vorfixierung löst sich dann bei Aktivierung der Knie-Rückhalteeinrichtung.

Weitere Merkmale und Vorteile der Erfindung ergeben sich aus der folgenden Beschreibung und aus der Zeichnung, auf die Bezug genommen wird. In der Zeichnung zeigen:
Fig. 1 eine perspektivische Ansicht der endungsgemäßen Knie-Rückhalteeinrichtung im Ruhezustand,
Fig. 2 die Knie-Rückhalteeinrichtung der Fig. 1 in aktiviertem Zustand,
Fig. 3 eine Schnittansicht der Knie-Rückhalteeinrichtung der Fig. 1,
Fig. 4 eine Draufsicht auf den für die Herstellung der Kniefängerplatte und der Fangbänder der Fig. 1 bis 3 verwendeten Materialzuschnitt,
Fig. 5 eine Draufsicht auf einen Materialzuschnitt für eine Knie-Rückhalteeinrichtung gemäß einer zweiten Ausführungsform der Erfindung,
Fig. 6A einen Ausschnitt aus einer Perforationslinie für eine Knie-Rückhalteeinrichtung gemäß einer weiteren Ausführungsform der Erfindung,
Fig. 6B die Perforationslinie der Fig. 6A im verformten Zustand.

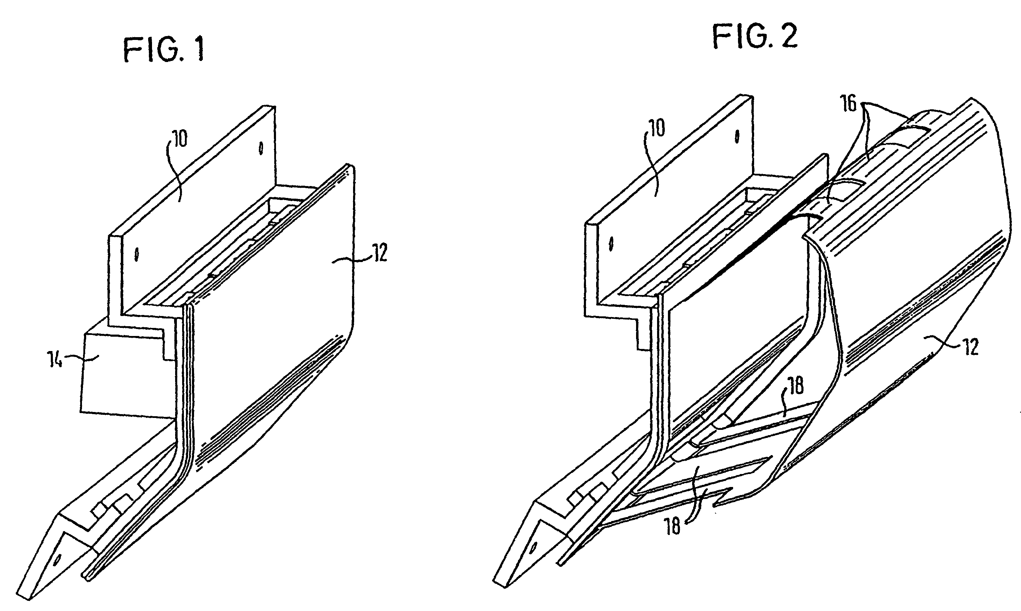

Die in der Fig. 1 dargestellte Knie-Rückhalteeinrichtung weist eine Basis 10 und eine Kniefängerplatte 12 auf. Die Kniefängerplatte 12 ist Teil einer Innenraumverkleidung oder eines Handschuhkastens eines Fahrzeugs (nicht dargestellt) und kann auf der Fahrer- bzw. der Beifahrerseite eines Fahrzeugs angeordnet sein. Die Basis 10 wird hierzu an einer Fahrzeugstruktur oder einem Handschuhkasten (nicht dargestellt) befestigt. Das Kniefängerbauteil kann mit einer Kunststoffbeschichtung oder einer Verkleidung versehen sein, die an die Innenraumverkleidung des Fahrzeugs angepaßt ist. In der Fig. 1 nur schematisch dargestellt ist ein Gassackmodul 14, bestehend aus einem Gasgenerator und einem Gassack. Im Falle eines Fahrzeugaufpralls wird das Gassackmodul 14 aktiviert, worauf sich der Gassack in Richtung der Kniefängerplatte 12 entfaltet.

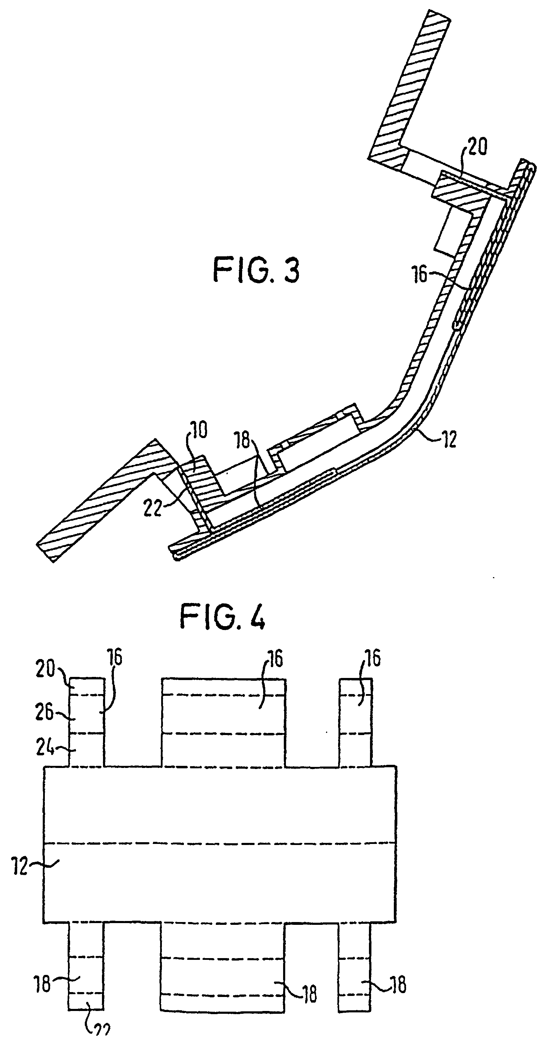

Dieser aktivierte Zustand der Knie-Rückhalteeinrichtung ist in der Fig. 2 dargestellt, wobei Gasgenerator und Gassack der Übersichtlichkeit halber nicht dargestellt sind. Durch den sich entfaltenden Gassack wird die Kniefängerplatte 12 von der Basis 10 weggeschoben. Die Bewegungsbahn der Kniefängerplatte 12 während des Entfaltungsvorgangs kann dabei durch die oberen Fangbänder 16 und die unteren Fangbänder 18 gesteuert werden, die die Kniefängerplatte 12 mit der Basis 10 verbinden. Der als Antriebsmittel vorgesehene Gassack muß daher keine Führungsfunktion für die Kniefängerplatte 12 erfüllen und kann damit lose an der Kniefängerplatte 12 anliegen. Wie in der Fig. 2 zu erkennen ist, sind die Fangbänder 16 bzw. 18 und die Kniefängerplatte 12 einstückig ausgebildet, und sie sind aus einem einzigen Blechzuschnitt hergestellt, der in der Fig. 4 dargestellt ist. Eine gesonderte Befestigung der Fangbändcr 16 bzw. 18 an der Kniefängerplatte 12 kann damit entfallen.

Wie in der Schnittansicht der Fig. 3 dargestellt ist, werden die Fangbänder 16 bzw. 18 auf die Rückseite der Kniefängerplatte 12 gefaltet und im Bereich eines sich senkrecht zur Kniefängerplatte 12 erstreckenden Befestigungsabschnittes 20 bzw. 22 an der Basis 10, beispielsweise durch Schrauben, befestigt. Die Fangbänder 16 bzw. 18 weisen in dem in der Fig. 3 dargestellten gefalteten Zustand eine Steifigkeit auf, die ausreicht, die Kniefängerplatte 12 während normaler Betriebszustände eines Fahrzeugs in Anlage an der Basis 10, d.h. in der Ruheposition, zu halten. Die erforderliche Steifigkeit der gefalteten Fangbänder ist durch das Fangbandmaterial selbst oder eine geeignete Verbindung der Fangbandabschnitte untereinander, z.B. durch Durchsetzfügen, realisiert. Es sind daher keine zusätzlichen Reißnähte oder ausreißbare Halteclipse zwischen Kniefängerplatte 12 und Basis 10 erforderlich, um die Kniefängerplatte 12 in der in der Fig. 1 und 3 gezeigten Ruheposition zu halten.

Bei Aktivierung des Gassackmoduls entfaltet sich der Gassack zwischen Basis 10 und Kniefängerplatte 12, wodurch die Fangbänder 16 bzw. 18 entfaltet und gestreckt werden. Hierbei werden die gefalteten Blechstreifen, die die Fangbänder 16 bzw. 18 bilden, plastisch verformt, indem sie aufgebogen werden. Nach Erreichen der Endposition der Kniefängerplatte 12, die in der Fig. 2 dargestellt ist, verhindern die Fangbänder 16 bzw. 18 eine weitere Bewegung der Kniefängerplatte 12 in Richtung der Knie eines Fahrzeuginsassen.

Beim Aufprall der Knie eines Fahrzeuginsassen wird die Kniefängerplatte 12 dann wieder in Richtung der Basis 10 bewegt, wobei Gas aus dem zwischen Basis 10 und Kniefängerplatte 12 liegenden Gassack ausströmt und Energie umgesetzt wird. Die Abfangbewegung der Kniefängerplatte 12 endet, wenn der Fahrzeuginsasse nach Beendigung des Aufpralls wieder in den Sitz zurückfällt. Die Kniefängerplatte 12 befindet sich dann in einer Zwischenstellung, die zwischen den in den Fig. 1 und 2 gezeigten Extrempositionen liegt. Auch in dieser Zwischenposition reicht die Steifigkeit der nun bereits plastisch deformierten Fangbänder 16 bzw. 18 aus, die Kniefängerplatte 12 in ihrer erreichten Zwischenposition zu halten. Die Kniefängerplatte 12 verbleibt damit in einer den Knien des Fahrzeuginsassen zugewandten Position, so daß auch bei einem nach dem ersten Aufprall evtl. erfolgenden zweiten Aufprall die Beine des Fahrzeuginsassen nicht durch eine lose und sich in undefinierter Position befindende Kniefängerplatte gefährdet werden.

Fig. 4 zeigt den Blechzuschnitt, der zur Herstellung der Kniefängerplatte 12 und der Fangbänder 16 bzw. 18 verwendet wird. An der rechteckigen Kniefängerplatte 12 sind Materiallappen angeformt, die die Fangbänder 16 bzw. 18 bilden. Um den in der Fig. 3 dargestellten Einbauzustand der Kniefängerplatte 12 und der Fangbänder 16 bzw. 18 zu erreichen, werden die Fangbänder 16 bzw. 18 entlang den in der Fig. 4 dargestellten gestrichelten Linien gefaltet. Wie beispielhaft an einem äußeren Fangband 16 dargestellt ist, ist das Fangband durch den Faltvorgang in drei Abschnitte gegliedert: Ein erster Abschnitt 24 wird in der Ebene der Fig. 4 nach unten auf die Kniefängerplatte 12 gefaltet. Daraufhin wird ein zweiter Abschnitt 26 nach oben auf den ersten Abschnitt 24 gefaltet, und schließlich wird der Befestigungsabschnitt 20 rechtwinkelig zu dem zweiten Abschnitt 26 abgebogen. Die Kniefängerplatte 12 wird dann noch in ihrem mittleren Bereich gebogen, so daß der in der Fig. 3 gezeigte Zustand erreicht ist und die Befestigungsabschnitte 20 bzw. 22 an der Basis festgelegt werden können. Die einbaufertige Kniefängerplatte 12 mit den Fangbändern 16 und 18 kann somit durch einfaches Ausschneiden eines Bleches und anschließendes Falten einbaufertig hergestellt werden.

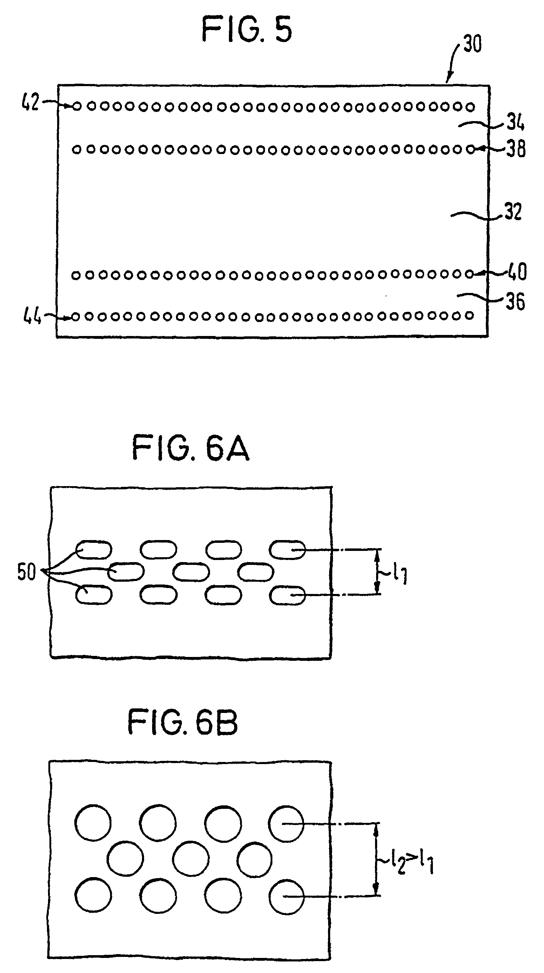

In Fig. 5 ist ein Materialzuschnitt 30 gezeigt, aus dem ein Kniefängerbauteil 32 und Fang- und Positionierungsmittel, die als Bereiche 34 und 36 des rechteckigen Materialzuschnitts ausgebildet sind, hergestellt werden. Das Kniefängerbauteil 32 ist jeweils durch eine Perforationslinie 38 bzw. 40 von dem Bereich 34 bzw. 36 getrennt. Die Bereiche 34 bzw. 36 sind ihrerseits durch jeweils eine weitere Perforationslinie 42 bzw. 44 in Abschnitte unterteilt, so daß die Bereiche 34 und 36 gefaltet und für den Einbau in ein Fahrzeug hinter dem Kniefängerbauteil 32 angeordnet werden können.

Der in Fig. 6A dargestellte Ausschnitt einer Perforationslinie zeigt deren Ausführung durch drei Linien versetzt zueinander angeordneter Langlöcher 50. In dem in der Fig. 6A gezeigten nichtverformten Zustand liegt zwischen der obersten und der untersten Langlochreihe ein Abstand l₁. Perforationslinien der in der Fig. 6A gezeigten Art können bspw. an die Stelle der in Fig. 5 gezeigten Perforationslinien angebracht werden.

Fig. 6B zeigt die Perforationslinie der Fig. 6A im verformten Zustand, nachdem das Kniefängerbauteil in Richtung der Knie eines Fahrzeuginsassen bewegt wurde und seine Endposition erreicht hat. Kurz vor Erreichen der Endposition des Kniefängerbauteils sind die Fang- und Positionierungsmittel entfaltet, so daß die Bewegung des Kniefängerbauteils abgebremst wird. Während des Abbremsens dehnt sich das Material zwischen den in Fig. 6A gezeigten Langlöchern 50, so daß diese eine im wesentlichen kreisrunde Form erhalten, wie sie in der Fig. 6B dargestellt ist. Durch diese Materialdehnung wird das Kniefängerbauteil nicht schlagartig abgebremst, so daß die Belastung für die Fang- und Positioniermittel selbst sowie für deren Befestigungen an der Fahrzeugstruktur vermindert ist. Nach der Materialdehnung liegt zwischen der obersten und der untersten Lochreihe ein Abstand l₂, der größer ist als der im unverformten Zustand vorhandene Abstand l₁.

## Patentansprüche

1. Knie-Rückhalteeinrichtung für Fahrzeuge mit einer Basis (10; 60), einem Kniefängerbauteil (12; 54), das in Richtung der Knie eines Fahrzeuginsassen bewegbar ist, einem Antriebsmittel, das zwischen der Basis (10; 60) und dem Kniefängerbauteil (12; 54) angeordnet ist, und an dem Kniefängerbauteil (12; 32; 54) und der Basis (10; 60) befestigten Fang- und Positionierungsmitteln (16, 18; 34, 36; 52), **dadurch gekennzeichnet, daß** die Fang- und Positionierungsmittel (16, 18; 34, 36; 52) eine vorbestimmte Steifigkeit aufweisen, so daß sie wenigstens unter dem Einfluß der eigenen Gewichtskraft keine Formänderung erfahren, aber bei Aktivierung des Antriebsmittels verformbar sind, und daß die Fang- und Positionierungsmittel (16, 18; 34, 36) einstückig mit dem Kniefängerbauteil (12; 32) ausgebildet sind.

2. Knie-Rückhalteeinrichtung nach Anspruch 1, **dadurch gekennzeichnet, daß** die Fang- und Positionierungsmittel wenigstens ein Fangband (16, 18) aufweisen und das wenigstens eine Fangband (16, 18) und das Kniefängerbauteil (12) aus einem einzigen Materialzuschnitt hergestellt sind.

3. Knie-Rückhalteeinrichtung nach Anspruch 2, **dadurch gekennzeichnet, daß** der Materialzuschnitt angeformte Materiallappen aufweist, die die Fangbänder (16, 18) bilden.

4. Knie-Rückhalteeinrichtung nach Anspruch 3, **dadurch gekennzeichnet, daß** die Materiallappen in Abschnitte unterteilt sind, die untereinander und/oder von dem Kniefängerbauteil durch Perforationslinien getrennt sind.

5. Knie-Rückhalteeinrichtung nach Anspruch 1, **dadurch gekennzeichnet, daß** die Fang- und Positionierungsmittel und das Kniefängerbauteil (32) aus einem einzigen rechteckigen Materialzuschnitt (30) hergestellt sind und die Fangund Positionierungsmittel als durch Perforationslinien (38, 40) von dem Kniefägerbauteil (32) getrennte Bereiche (34, 36) des rechteckigen Materialzuschnitts (30) ausgebildet sind.

6. Knie-Rückhalteeinrichtung nach Anspruch 4 oder 5, **dadurch gekennzeichnet, daß** die Perforationslinien durch Langlöcher (50) gebildet sind.

7. Knie-Rückhalteeinrichtung nach einem der vorstehenden Ansprüche, **dadurch gekennzeichnet, daß** die Fang- und Positionierungsmittel (16, 18; 52) eine Steifigkeit aufweisen, die ausreicht, das Kniefängerbauteil (12; 54) in einer Ruheposition zu halten.

8. Knie-Rückhalteeinrichtung nach einem der vorstehenden Ansprüche, **dadurch gekennzeichnet, daß** die Fang- und Positionierungsmittel (16, 18; 34, 36; 52) plastisch verformbar sind.

9. Knie-Rückhalteeinrichtung nach Anspruch 8, **dadurch gekennzeichnet, daß** die Fang- und Positionierungsmittel (16, 18; 52) im plastisch verformten Zustand eine Steifigkeit aufweisen, die ausreicht, das Kniefängerbauteil (12; 54) in einer nach dem Abfangen der Knie eines Fahrzeuginsassen erreichten Position zu halten.

10. Knie-Rückhalteeinrichtung nach einem der vorstehenden Ansprüche, **dadurch gekennzeichnet, daß** das Antriebsmittel einen aufblasbaren Gassack (62) aufweist.

## Claims

1. A knee restraint device for vehicles, comprising a base (10; 60), a knee protector component (12; 54) which is movable towards the knees of a vehicle occupant, a drive means which is arranged between the base (10; 60) and the knee protector component (12; 54), and limiting- and positioning means (16, 18; 34, 36; 52) fastened to the knee protector component (12; 32; 54) and the base (10; 60), **characterized in that** the limiting- and positioning means (16, 18; 34, 36; 52) have a predetermined rigidity, so that they do not undergo any change in shape at least under the influence of their own weight force, but are deformable on activation of the drive means, and that the limiting- and positioning means (16, 18; 34, 36) are constructed in one piece with the knee protector component (12; 32).

2. The knee restraint device according to Claim 1, **characterized in that** the limiting- and positioning means have at least one limiting strap (16, 18) and the at least one limiting strap (16, 18) and the knee protector component (12) are produced from a single material blank.

3. The knee restraint device according to Claim 2, **characterized in that** the material blank has material tongues formed integrally therewith which form the limiting straps (16, 18).

4. The knee restraint device according to Claim 3, **characterized in that** the material tongues are divided into sections which are separated from each other and/or from the knee protector component by perforation lines.

5. The knee restraint device according to Claim 1, **characterized in that** the limiting- and positioning means and the knee protector component (32) are produced from a single rectangular material blank (30) and the limiting- and positioning means are constructed as regions (34, 36) of the rectangular material blank (30) separated from the knee protector component (32) by perforation lines (38, 40).

6. The knee restraint device according to Claim 4 or 5, **characterized in that** the perforation lines are formed by oblong holes (50).

7. The knee restraint device according to any of the preceding claims, **characterized in that** the limiting- and positioning means (16, 18; 52) have a rigidity which is sufficient to keep the knee protector component (12; 54) in a position of rest.

8. The knee restraint device according to any of the preceding claims, **characterized in that** the limiting- and positioning means (16, 18; 34, 36; 52) are plastically deformable.

9. The knee restraint device according to Claim 8, **characterized in that** the limiting- and positioning means (16, 18; 52) in the plastically deformed state have a rigidity which is sufficient to keep the knee protector component (12; 54) in a position reached after having protected the knees of a vehicle occupant.

10. The knee restraint device according to any of the preceding claims, **characterized in that** the drive means comprises an inflatable gas bag (62).

## Revendications

1. Système de retenue des genoux pour des véhicules, comportant une base (10 ; 60), un composant de protection des genoux (12 ; 54) qui est déplaçable en direction des genoux d'un passager du véhicule, un moyen d'entraînement qui est agencé entre la base (10 ; 60) et le composant de protection des genoux (12 ; 54), et des moyens de retenue et de positionnement (16, 18 ; 34. 36 ; 52) fixé au composant de protection des genoux (12 ; 32 ; 54) et à la base (10 ; 60), **caractérisé en ce que** les moyens de retenue et de positionnement (16, 18 ; 34. 36 ; 52) présentent une rigidité prédéterminée de sorte qu'ils ne subissent pas de changement de forme au moins sous l'influence de la force de leur propre poids, mais qu'ils sont déformables lorsque le moyen d'entraînement est activé, et **en ce que** les moyens de retenue et de positionnement (16, 18 ; 34. 36) sont réalisés d'un seul tenant avec le composant de protection des genoux (12 ; 32).

2. Système de retenue des genoux selon la revendication 1, **caractérisé en ce que** les moyens de retenue et de positionnement présentent au moins une bande de garde (16, 18) et **en ce qu'**au moins une bande de garde (16, 18) et le composant de protection des genoux (12) sont fabriqués à partir d'une seule pièce de matériau découpée.

3. Système de retenue des genoux selon la revendication 2, **caractérisé en ce que** la pièce de matériau découpée présente des pattes de matériau façonnées sur celle-ci, qui forment les bandes de garde (16, 18).

4. Système de retenue des genoux selon la revendication 3, **caractérisé en ce que** les pattes de matériau sont subdivisées en tronçons qui sont séparés les uns des autres et/ou du composant de protection des genoux par des lignes de perforation.

5. Système de retenue des genoux selon la revendication 1, **caractérisé en ce que** les moyens de retenue et de positionnement et le composant de protection des genoux (32) sont fabriqués à partir d'une seule pièce de matériau découpée rectangulaire et **en ce que** les moyens de retenue et de positionnement sont réalisés sous forme de zones (34, 36) de la pièce de matériau découpée (30) rectangulaire, qui sont séparées du composant de protection des genoux (32) par des lignes de perforation (38, 40).

6. Système de retenue des genoux selon la revendication 4 ou 5, **caractérisé en ce que** les lignes de perforation sont formées par des trous oblongs (50).

7. Système de retenue des genoux selon l'une des revendications précédentes, **caractérisé en ce que** les moyens de retenue et de positionnement (16, 18 ; 52) présentent une rigidité qui est suffisante pour maintenir le composant de protection des genoux (12 ; 54) dans une position de repos.

8. Système de retenue des genoux selon l'une des revendications précédentes, **caractérisé en ce que** les moyens de retenue et de positionnement (16, 18 ; 34 ; 36 ; 52) sont plastiquement déformables.

9. Système de retenue des genoux selon la revendication 8, **caractérisé en ce qu'**à l'état plastiquement déformé, les moyens de retenue et de positionnement (16, 18 ; 52) présentent une rigidité qui est suffisante pour maintenir le composant de protection des genoux (12 ; 54) dans une position atteinte après la retenue des genoux d'un passager du véhicule.

10. Système de retenue des genoux selon l'une des revendications précédentes, **caractérisé en ce que** le moyen d'entraînement présente un coussin à gaz (62) gonflable.
